# Europäisches Patentamt

# European Patent Office

# Office européen des brevets

(11) Publication number: **0 064 379**
**B1**

(12) **EUROPEAN PATENT SPECIFICATION**

(45) Date of publication of patent specification: **14.08.85**

(51) Int. Cl.[4]: **A 01 N 25/10**

(21) Application number: **82302147.2**

(22) Date of filing: **27.04.82**

(54) Pesticidal composition and methods for controlling pests.

(30) Priority: **01.05.81 US 259760**

(43) Date of publication of application:
**10.11.82 Bulletin 82/45**

(45) Publication of the grant of the patent:
**14.08.85 Bulletin 85/33**

(84) Designated Contracting States:
**CH DE FR GB IT LI SE**

(56) References cited:
**US-A-3 639 583**
**US-A-4 087 273**
**US-A-4 237 113**

**N.CARDARELI: "Controlled release pesticides formulations", 1976, CRC Press, pages 63-70, Cleveland (USA);**
**JOURNAL OF APPLIED POLYMER SCIENCE, vol. 22, 1978, pages 2325-2339, New York (USA); J.S. VRENTAS et al.: "A free-volume interpretation of the influence of the glass transition on diffusion in amorphous polymers"**

(73) Proprietor: **UNIROYAL, INC.**
**1230 Avenue of the Americas Rockefeller Center New York, New York 10020 (US)**

(72) Inventor: **Peterson, Robert F., Jr.**
**Flanders Road Woodbury**
**Litchfield Connecticut (US)**
Inventor: **Mitchell, Bertha E.**
**274 Andrews Road Wolcott**
**New Haven Connecticut (US)**
Inventor: **Quint, Robert J.**
**6 Dunrobin Lane Watertown**
**Litchfield Connecticut (US)**

(74) Representative: **Harrison, Michael Robert et al**
**URQUHART-DYKES & LORD 11th Floor Tower House Merrion Way**
**Leeds LS2 8PB West Yorkshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invenion relates to a pesticidal composition and to a method of controlling pests. More particularly, the invention relates to a means of more efficiently using a pesticide against pests (e.g., insects, larvae, weeds, fungi, etc.) which are active in the soil.

The invention is directed especially to a pesticidal composition in which the pesticide is dispersed in a polymeric material having a glass transition temperature of from −15° to 50°C, preferably −10° to 50°C.

Prior to this invention, the larval stage of harmful insects such as corn rootworm has usually been controlled by applying a band of insecticide well in advance of the time that the eggs hatch, often at planting time. Among the most important of the pests with which the invention is concerned are the northern, southern and western corn rootworms, *Diabrotica longicornis* (Say), *Diabrotica Undecimpunctata howardi* (Barbar) and *Diabrotica virgifera* (Le Conte), respectively. Also of importance are the cabbage maggot, *Hylemya brassicae*; seed-corn maggot, *Hylemya cilcrura*; onion maggot, *Hylemya antiqua*; sugar beet root magot, *Tatanoos myopaeformis*; wheat stem maggot, *Meromyza americana*; turnip maggot, *Hylemya floralis*; corn wire-worm, *Melanotus cribulosus* or *fissilis*; Oregon wireworm, *Melanotus oregonensis* (Le Conte); cotton wire-worm, *Horistonotus uhlerii,* wheat wireworm, *Agriotes mancus*; false wireworm, *Eleodes suturalis*; Columbia *Basis* wireworm, *Limonius subauratus* (Le Conte); Western field wireworm, *Limonius infuscatus*; Pacific Coast wireworm, *Limonius canus*; sugar-beet wireworm, *Limonius californicus*; carrot rust fly larvae, *Psila rosae*; Japanese beetle larvae, *Popillia japonica*; seed-corn beetle, *Agonoderus lecontei*; Hessian fly larvae, *Mayetiola destructor*; rice water weevil, *Lisorphoptrus oryzophilus*; and June beetle larvae, *Phyllophaga rugosa,* commonly referred to as white grubs.

Among the crops which can be protected against these insects by the method of the invention are beets, corn, cotton, peanuts, potatoes, rice, sorghum, sugar beets, and other cereals.

The insecticides now used for these applications are essentially non-persistent in the soil. This biodegradability is a disadvantage insofar as it requires that large excesses of insecticide be applied at planting time (when the soil is cold) in order to be certain that a pesticidally active amount of insecticide is present in the soil when these pests hatch (at which time soil temperature are significantly higher).

The foregoing considerations are also applicable to herbicides. Many herbicides are now applied when the field is being prepared for planting and must be incorporated immediately into the soil in order to reduce losses due to the volatile nature of the herbicide. Application takes place relatively early in the spring, while the soil temperature is significantly lower than the temperature at which the weeds to be controlled will germinate. These herbicides, once sprayed into the soil, will immediately start to degrade or volatilize and will therefore be present in the soil at lower concentration when soil temperature has risen to the range at which the weeds begin to germinate.

In temperate climates, the soil warms up very gradually in the spring. Records in soil temperature at the 10.16 cm (4") depth in bare fields are kept by the National Weather Service and published in the Weekly Weather and Crop Bulletin, a periodical publication of the U.S. Department of Commerce. These records show that the spring warming is a very slow process and is not greatly affected by a brief spell of warmer weather. In fact, the increase in soil temperature lags considerably behind the increase in average air temperature, and greatly "smooths out" the day-to-day variation in temperature. This invention makes use of this phenomenon.

The activity of living things in the soil is related in a large measure to soil temperature. For instance, wheat can develop at about 5°C, corn and sorghum can develop at about 12°C, and cotton and soybeans can develop at about 21°C, as described in the aforementioned Weekly Weather and Crop Bulletin. The soil insects affecting these crops generally hatch from eggs into the larval state some degrees above the germination temperature of that crop; thus, for example, most corn rootworm larvae hatch when the soil temperature reaches 18—19°C.

It is an object of this invention to provide formulations of insecticides active against soil pests which will hold the insecticide until just before the hatching temperature of the insect larvae is reached and which will release the insecticide at that soil temperature. Such a formulation protects the insecticide against decay until the insecticide is released into the soil, thus allowing the use of lower levels of pesticide than used at present.

It is a further object of this invention to provide formulations of herbicides which will hold the herbicide until the soil temperature is reached at which weeds will germinate, and release the herbicide at that temperature.

It is a further object of this invention to provide formulations of herbicide which need not immediately be incorporated into the soil. Although incorporation is still needed, the option of delaying incorporation by several days provides a flexibility to the user which he does not have at present.

The principles of this invention may be used to deliver a fungicide or nematocide or fumigant into the soil at the soil temperature at which a particular fungal disease or pest becomes active. Likewise another object of the invention is to deliver growth regulants, trace elements or fertilizers to the plant at the proper growth stage. Other uses of the invention will be obvious to a person skilled in the art from the present disclosure.

Pesticides which are particularly useful in the practice of this invention are those which show relatively

2

0 064 379

short persistence in the soil and therefore benefit from being released into the soil at the proper soil temperature. Thus, the more biodegradable agents such as organophosphate and carbamate insecticides are particularly aided by the temperature controlled release formulation of this invention. Similarly, the more volatile materials such as trifluralin are especially useful in the invention.

Another characteristic of materials particularly useful in the invention is that they are active when placed in the soil, as distinguished from materials which are active only when applied to foliage.

A list of materials useful in the practice of this invention includes, but is not limited to:

Insecticides

Organophosphate insecticides: phorate, terbufos, chlorpyrifos, isofenphos, azinphos-methyl, azinphos-ethyl, moncrotphos, fenthion, phoxim, chlorphoxim, chlorfenvinphos, chlormephos, phosfolan, fensulfothion, diazinon, dimethoate, disulfolon, fonofos, etrimfos, demeton, demetion-S-methyl, oxydemeton-methyl, fosthienan pirimphos-ethyl, prothoate, thionazin;

Carbamate insecticides: carbofuran, bendiocarb, aldicarb;

Other insecticides: butocarboxim.

Herbicides

Dinitroaniline herbicides: benefin, dinitramine, ethafluralin, fluchloralin, isopropalin, pendimethalin, profluralin and trifluralin;

Thio carbamate herbicides: butylate, CDEC, cycloate, diallate, EPTC, pebulate, triallate, vernolate;

Carbamate herbicides: chlorpropham, propham;

Uracil herbicides: bromacil, lenacil, terbacil;

Amide herbicides: bensulide, CDAA, diphenamid, napropamide;

Acetanilide herbicides: alachlor, butachlor, metolachlor, propachlor;

Triazine herbicides: metribuzin;

Phenoxy herbicides: 2,4-D, 2,4-DP, 2,4DB, 2,4,5-T, dalapon, MCPA.

Fungicides

Dicarboximide fungicides: captan, folpet, captafol;

Oxathiin fungicides: carboxin, oxycarboxin;

Benzimidazole fungicides: benomyl, thiophanate, thiabendazole.

Nematacides and fumigants not mentioned above: ethylene dibromide, dibromochloropropane, methyl bromide, metam-sodium, dazomet.

Objects of the present invention are met by mixing a pesticide with a polymer of low crystallinity whose glass transition temperature $(T_g)$ lies near the temperature at which release is desired.

The glass transition temperature of a polymer is the temperature of the "onset of extensive molecular motion" (F. W. Billmeyer, Principles of Polymer Science, 2nd edition, p. 209). Below this temperature, a polymer is hard, brittle, and glass-like in its properties; above this temperature it is soft, deformable, and rubber-like in its properties. Of interest to the present invention is the fact that the diffusion rate through a polymer tends to be inversely proportional to hardness; thus, a pesticide dispersed in a polymer will show a slow diffusion rate below the polymer glass transition temperature, and a more rapid diffusion rate above the glass transition temperature. In other words, a pesticide will predominantly remain inside the polymer below the glass transition temperature, and will release into the soil above the glass transition temperature.

The diffusion rate is also proportional to the square of the distance to be travelled. The pesticide-in-polymer dispersion is therefore suitably made into particles of such a size that significant release will not take place below the glass transition temperature, yet will occur relatively rapidly above the glass transition temperature.

It should be pointed out that the glass transition is not a sharp transition; that is, some diffusion will take place below the glass transition temperature, and the rate of diffusion will speed up as the glass transition temperature is approached. The glass transition temperature is the temperature at which the diffusion rate is changing most rapidly. It should also be pointed out that a compatible plasticizer will lower the effective glass transition temperature of a polymer. To the extent that some of the active ingredients may also act as plasticizers, the effective glass transition temperature of the final compound will also be affected by the glass transition temperature of all of the components, and may need to be determined by such standard techniques as differential thermal analysis or by a torsion pendulum. A filler may also be added to this system without changing the basic nature of this invention.

Any polymer of relatively low crystallinity, whose glass transition temperature is in the desired range, is useful in this invention. The proviso "of low crystallinity" is made because a highly crystalline polymer would be of relatively high hardness even above its glass transition temperature; hence its diffusion rate would not show a large increase above its glass transition temperature. A maximum crystallinity of about 30% (as determined for example by X-ray examination) is acceptable; however, an essentially amorphous polymer is preferred. Blends of polymers having glass transition temperatures in the desired range are also useful in the invention.

3

A particular advantage, however, is obtained if the polymer is made by emulsion polymerization. In this case the pesticide (and filler and plasticizer if desired) can be added directly to the polymer latex while stirring, and the polymer latex coagulated by methods well known to polymer chemists such as the addition of multivalent cations, heat, etc. The coagulated latex will contain a dispersion of pesticide in polymer and can be dried and ground to the proper particle size and used without further mixing.

Cardarelli and Neff, in U.S. Patent 3,639,583, disclose a vulcanized elastomer composition with a low, controlled and tailor-made rate of toxicant release for extended biocidal activity. The elastomers described in this patent range from a glass transition temperature of about −110°C (cis-polybutadiene) to −13°C (52% acrylonitrile, 48% butadiene copolymer) and release, according to the patentees, by a "diffusion-dissolution" mechanism requiring actual solubility of the pesticide in the elastomer. This patent teaches away from the present invention, since we have found that the polymers which are most useful are those in which the pesticide is least soluble, as discussed below and as shown in the examples below. In other work, Cardarelli discloses in U.S. 3,417,181 the use of vulcanized elastomers for controlled release of pesticides into water so as to kill water-spawned or water-carried disease-transmitting organisms. The elastomers disclosed in this patent also have glass transition temperatures well below the region of interest for this invention. Other patents, such as U.S. 3,851,053 to Cardarelli do not disclose or make reference to polymers with glass transition temperatures in excess of −20°C.

Pesticides have also been incorporated into plastics, that is, into polymers which are well below their glass transition temperature. For instance, U.S. 3,864,468 to Kydonieus teaches the incorporation of insecticides into a plastic "reservoir" to obtain lengthened residual. F. W. Harris, in Table I of a review article presented at the 1976 Controlled Release Pesticide Symposium, lists numerous plastics which have been used as "reservoirs" for pesticides, all of which have glass transition temperatures well in excess of 50°C.

Although every polymer whose glass transition temperature is in the desired range is useful in this invention, the polymer-pesticide combination should be optimized for each system. That is, any pesticide dispersed in a polymer having a glass transition temperature of (for example) 20°C will, according to this invention, show a substantial increase in diffusion rate as the glass transition is passed. However, the release rate above the glass transition temperature (and hence the difference in release rates as the glass transition temperature is passed) will be greatest for those polymers in which the pesticide is least soluble.

Where the pesticide is a liquid, its solubility in the polymer can be measured directly. Where the pesticide is a solid, its solubility in the polymer can be ascertained by measuring the solubility of the polymer in a solvent in which the pesticide is relatively soluble. As examples of this invention will show, the most perferred polymers will be those in which the pesticide (or a good solvent for the pesticide) is least soluble.

Kanakkanatt has derived equations relating the effect of various parameters on the release rate of organotin molluscicides out of elastomers. His equations, as they appear in Cardarelli, Controlled Released Pesticide Formulation (CRC Press, 1976) page 65, predict a slow rise in the diffusion coefficient with increasing temperature, but do not predict a rapid change in the diffusion rate in the region of the polymer glass transition temperature. In fact, Kanakkanatt teaches away from the present invention by saying that "no significant change in the diffusion coefficient is found for values of $T-T_g$ below 65."

O'Neill (in the publication edited by Kydonieus, Controlled Release Technologies, CRC Press, 1980, vol I, page 134) specifically discusses the effect of glass transition temperature on diffusion. He correctly states that "in general, the further below its glass transition temperature a polymer is employed as a diffusion barrier, the less its free volume and the less permeable its amorphous (noncrystalline) phase." However, he, too, does not recognize the advantage of a rapid rise in the diffusion coefficient as the glass transition temperature is passed.

Pitt and Schindler, in a paper delivered at the Controlled Release Society meeting in 1979 (Program and Abstract Book, I, 17) divide materials into two classes, "those in the glassy state at body temperature and those in the rubbery state." However, this work studied release rates only at body temperature and did not investigate how release rate might vary with temperature.

It is clear from the references of interest that although bioactive materials have been dispersed into plastics, and into vulcanized rubbers, bioactive materials have not been dispersed into a polymer which can change from a plastic-like material to a rubber-like material and dispersed into the soil, so that the change will occur as the soil warms up.

In one important aspect, the invention is accordingly concerned with a pesticidal composition comprising:

(A) a pesticide, and

(B) a polymer in which said pesticide is dispersed,

wherein said polymer has a crystallinity of 0—30%, an effective glass transition temperature of from −15° to 50°C, preferably −10 to 50°C, and wherein the weight ratio of (B):(A) is from 40:60 to 99.1, and wherein the ratio of the solubility of the active chemical (A) to the solubility of the polymer (B), termed the $S_c:S_p$ ratio, in a common solvent, be 4:1 or greater or 1:4 or less.

Accordingly, the active chemical and polymer should not have similar solubilities in the common solvent (another way of saying that the polymer should not be in a good solvent for the pesticide), that is, the solubility ratio $S_c:S_p$ should be outside the range extending from more than 1:4 to less than 4:1. Stated

4

in another way the solubility of the polymer and the solubility of the pesticide (in a common solvent) should differ by at least a factor of 4; one should be at least 4 times greater, or at least 4 times less, than the other.

Particularly valuable compositions are those containing up to 70% by weight of filler based on the weight of the polymer (B).

In accordance with one practice of the invention, the desired effective glass transition temperature within the stated range of −15° to 50°C (preferably −10° to 50°C), is provided by mixing a plasticizer with the polymer (such plasticizer having the effect of lowering the glass transition temperature as indicated previously).

The polymer (B) is preferably selected from butadiene-acrylonitrile copolymer, butadiene-styrene copolymer, isoprene-acrylonitrile copolymer, carboxylated vinyl acetate copolymer, vinyl acetate-acrylic copolymer, vinyl chloride polymer, vinyl chloride copolymer, vinyl acetate-butyl acrylate-butadiene terpolymer, acrylonitrile butylacrylate-butadiene terpolymer, acrylonitrile-butyl acrylate copolymer and vinyl acetate polymer.

Preferred pesticides are:

3-trimethylstannylpropyl N-t-butylcarbamate

O,O-diethyl S-ethylthiomethyl phosphorodithioate (phorate)

S-(1,1-dimethylethyl) thiomethyl O,O-diethyl phosphorodithioate (terbufos)

O,O-diethyl-O-(3,5,6-trichloro-2-pyridyl) phosphorothioate (chloropyrifos)

2,3-dihydro-2,2-dimethyl-7-benzofuranyl N-methylcarbamate (carbofuran)

2,2-dimethyl-1,3-benzodioxyl-4-yl N-methylcarbamate (bendiocarb)

1-methylethyl 2-[(ethoxy)(1-methylethyl)amino]phosphinothioyl oxy benzoate (isofenphos)

O-ethyl S,S'-dipropyl phosphorodithioate (ethoprop)

O-ethyl S-phenyl ethylphosphonodithioate (fonofos)

O,O-diethyl O-(6-methyl-2-(1-methylethyl)-4-pyrimidinyl) phosphorothioate (diazinon).

Other preferred aspects of the invention involve the use of organotin insecticides, organophosphate insecticides or carbamate insecticides.

As indicated, valuable compositions of the invention utilize herbicides as the pesticidal chemical (A), particularly a herbicide selected from carbamate herbicide, thiocarbamate herbicide, dithiocarbamate herbicide, dinitroaniline herbicide, acetanilide herbicide, triazine herbicide, amide herbicide, and phenoxy herbicide.

The following examples, in which all quantities are expressed by weight unless otherwise indicated, will serve to illustrate the practice of the invention in more detail.

Example 1

This example shows that a significant increase in release rate was found on passing through the glass transition temperature of the polymer, in contrast to the change in release from a polymer well above its glass transition temperature.

The polymer employed to represent the practice of the invention was a copolymer of butadiene and styrene containing about 80% styrene, prepared in aqueous emulsion. The polymer was flocculated using magnesium chloride solution, washed, filtered and dried before use. Glass transition temperature of this material was found to be 21°C.

Synpol 1500 (trademark; a commercial copolymer of styrene and butadiene containing 23% styrene, prepared in aqueous emulsion) was used as a polymer well above its glass transition temperature (outside the invention). Its glass transition temperature was found to be −56°C.

A small internal mixer (C. W. Brabender Co) was used to disperse 15.0 g of dinoseb (2-1-methylpropyl-4,6-dinitrophenol, Alpine Chemical Co) and 15.0 g of attapulgis clay into 30 g of each polymer. Each compound thus contained 25% by weight of dinoseb.

0.5 g of each of the materials described above was placed in a mixture of 25 g propylene glycol and 75 g water at 0°C. At 24 hour intervals the liquid was poured off and a new mixture of 25 g propylene glycol and 75 g water was added, and the temperature raised 10°C. This procedure was repeated until samples had been taken at four different temperatures. Each sample was then analyzed to determine the amount of dinoseb that had released out of the polymer into the liquid. The results are shown in Table I, where "DN" stands for dinoseb.

| Storage temperature, °C | DN Released from SBR 1500 Tg −56°C ppm in solution | DN Released from 80% styrene butadiene copolymer Tg 21°C ppm in solution |
|---|---|---|
| 0 | 4.0 | 0.17 |
| 10 | 5.7 | 2.3 |
| 20 | 8.8 | 3.0 |
| 30 | 15.0 | 9.2 |

For the polymer well above its glass transition temperature, SBR 1500 (Tg −56°C), the release rate changed by a factor of 4 over the temperature range tested; for the polymer of $T_g$ 21°C, the release rate changed by a factor of more than 50.

Example 2

This example illustrates greenhouse testing for control of the Southern corn rootworm.

As a standard for comparison, samples on attapulgis clay were prepared as follows:

10.4 g of 96% 3-trimethylstannylpropyl-N-t-butyl carbamate was diluted with 89.6 g methylene chloride and sprayed over 89.6 of attapulgis granule base (600 μm/300 μm mesh) (30/50 mesh) while stirring gently. After mixing, the granules were dried overnight to remove solvent. These granules contain 10% active ingredient.

Temperature release granules of the invention were prepared as follows:

1.0 g (96% active) 3-trimethylstannylpropyl-N-t-butyl carbamate was added to 117 g of a polymer latex containing 8.55% by weight of an acrylonitrile-butadiene copolymer 63—66% acrylonitrile with a $T_g$ of 17°C as measured by differential thermal analysis. The mixture was coagulated by the addition of a 30% aluminum sulfate solution. The coagulated latex was filtered on filter paper, washed with cold water to remove the aluminum sulfate, and dried overnight. The resultant cake was mixed with solid carbon dioxide and granulated by grinding in a Waring [trademark] blender. These granules contain 9% active ingredient.

Pots containing 400 g of a fine sandy loam soil were treated with 4 mg of insecticide granules, watered, and held at 10°C for a varying number of weeks. Water was added as needed in not more than 50 ml aliquots throughout the test. At the end of this time period, the pots were placed in a greenhouse (27°C) and three corn (Zea mays) seeds were planted in each pot. Five days later, after the corn had germinated, ten Southern corn rootworm (Diabrotica undecimpunctata) larvae were loaded into each pot, and the pot surrounded by a plastic bag to prevent escape of the larvae. One week later, mortality counts were taken. Checks containing germinated corn and no chemical were also loaded with worms and tested for mortality after seven days. Abbott's formula was used to determine adjusted % control.

Data obtained were as follows:

| Weeks before rootworms loaded | 1 | 4 | 6 | 8 |
|---|---|---|---|---|
| Adjusted % control, Conventional granules on attapulgis clay | 86.2 | 81.4 | 100 | 64.5 |
| Adjusted % control, Invention granules | 86.2 | 95.4 | 89.7 | 96.8 |

Control with both formulations is approximately equal for the first six weeks of the test. In the eight week residual test, however, the conventional granule is no longer giving economic control, while the invention granule is maintaining an acceptable level of control.

Example 3

This example gives field results.

An acrylonitrile-butadiene copolymer 63—66% acrylonitrile as in Example 2 having a glass transition temperature of 14°C was used. Granules based on this copolymer were prepared according to the following recipe:

| 6184 g copolymer late (15.2% solids) | 940 g |
|---|---|
| 25 g clay | 25 g |
| 25 g sodium silicate | 25 g |
| 110 g O,O-diethyl S-ethylthiomethylphosphorodithioate (phorate) | 110 g |

The foregoing materials were mixed with agitation and the mixture was then coagulated with a solution of aluminum sulfate in water, filtered, washed and dried overnight. The dried material was then mixed with solid carbon dioxide and ground in a Waring blender to pass 3.35 mm (6) mesh. This product contained 10% active chemical.

Similarly, a product of the invention was also made using an acrylonitrile-butadiene copolymer 61—65% acrylonitrile with a glass transition temperature of 7°C.

A commercial formulation of the same insecticide (Thimet 15G; trademark American Cyanamid Co.) was used as a standard.

These granules were applied to the soil in a 17.78 cm (7") band using a bander mounted on the planter ahead of the press wheel. Corn (Zea mays) seed was planted at the same time.

Eleven weeks after planting, the tests were scored using a 1—6 rating system in which 1 represents no damage and 6 represents severe damage. A description of the rating system and the procedure used may be found in T. M. Hills and D. C. Peters, A Method of Evaluating Post-planting Insecticide Treatments for Control of Western Corn Rootworm Larvae, Jour. Econ. Entomology. *64* 764—5 (1971).

**0 064 379**

The results are shown in the table below, wherein the "Phorate-10G" samples represent the invention.

| Formulation | Kg active ingredient/ha (lb/ac) | Rating (average of 3 plots) |
|---|---|---|
| Thimet-15g (Control; Commercial formulation) | 1.12 (1.0) | 1.60 |
| Phorate-10G (Invention; Polymer $T_g$ 14°C) | 0.56 (0.5) | 2.02 |
| do. | 0.28 (0.25) | 2.13 |
| do. | 0.14 (0.125) | 1.89 |
| Phorate-10G (Invention; Polymer $T_g$ 7°C) | 0.56 (0.5) | 1.84 |
| do. | 0.28 (0.25) | 2.02 |
| do. | 0.14 (0.125) | 2.84 |
| Untreated check | 0 (0) | 3.22 |

From these data it can be seen that the experimental formulation with a polymer of 14°C $T_g$ gave economic control at greatly reduced rates over the standard formulation. The formulation with a acrylonitrile/butadiene copolymer polymer of $T_g$ 7°C did not give control at the lowest rate tested. Soil temperature exceeded 7°C quite early in this test and the phorate, once released from the polymer, was not present in the soil in sufficient quantity, at the lowest rate tested, to control the rootworms at their hatching time.

Example 4

This example shows compositions of the invention with carbofuran and illustrates the relation between polymer solubility and performance. The general procedure for preparation of pesticidal granules in this invention was as follows:

1) 10.3 g carbofuran (97% pure) was mixed with 0.1 g Aerosol OTB (trademark), a wetting agent (to aid in the dispersion of carbofuran in the latex);

2) The product of step 1 was dispersed in sufficient latex to give 90.0 g dry weight of polymer;

3) The product of step 2 was poured into a solution of magnesium sulfate in water to coagulate the latex;

4) The coagulated dispersion (10.0% carbofuran) was filtered, washed and dried;

5) The dried material was ground in a Waring (trademark) blender;

6) The 1.00 m—600 μm mesh (18—30 mesh) fraction [pass 1.00 mm mesh (18 mesh), does not pass 600 μm mesh (30 mesh)] was collected by sieving.

This procedure was followed for all experimental samples containing carbofuran. Granules containing no active ingredient were also prepared as above and used for solubility measurements.

Solubility measurements in n-propanol were made as follows:

To about 2 g of polymer granules about 20 g of n-propanol was added. The samples were agitated briefly at half-hour intervals and left to stand overnight. On the next day, an aliquot was taken from the clear liquid and weighed accurately into an aluminum weighing dish of known weight. The contents of the dish were then evaporated to dryness. Solubility of the polymer was calculated as follows:

$$\text{Solubility} = \frac{(\text{Dish} + \text{dry polymer}) - \text{dish}}{(\text{Dish} + \text{aliquot}) - \text{dish}}$$

and is expressed as weight polymer dissolved in 100 g n-propanol.

The formulation were evaluated as follows:

Pots containing 1600 g of a fine sandy loam soil were treated with 0.25 ppm of active carbofuran (4 mg granules) and watered and held at 10°C for three weeks. Water was added as needed in not more than 50 ml aliquots throughout the tests. At the end of this time, the pots were placed in a greenhouse at 27°C and two corn seeds planted in each pot. Five days later, after the corn had germinated, ten Southern corn rootworm larvae (*Diabrotica undecimpunctata*) were loaded into each pot, and the pot surrounded by a plastic bag to prevent the escape of the larvae. One week later, the test was scored for % of roots undamaged by

7

rootworm larvae. Checks containing germinated corn and no insecticide were also loaded with rootworm as above and scored by the same procedure. The table (in which samples (a), (b) and (c) represent the practice of the invention and all other samples are outside the invention) below shows the compositions tested.

| Polymer (% wt) | Tg[1] °C | Sp[2] g | Sc[3]/Sp | Undamaged roots, % |
|---|---|---|---|---|
| (a) poly[butadiene(20)-styrene(80)] | +20 | .55 | 7.8 | 64 |
| (b) poly(vinylacetate) | +30 | .65 | 6.6 | 36 |
| (c) poly(acrylonitrile-butadiene-butylacrylate) | −13 | .93 | 4.6 | 45 |
| (d) poly(vinylchloride-acrylate)[4] | +6 | 1.1 | 3.9 | 9 |
| (e) poly(vinylchloride-acrylate)[5] | +68 | 1.1 | 3.9 | 0 |
| (f) poly[acrylonitrile(41)-isoprene(59)] | +16 | 1.4 | 3.1 | 0 |
| (g) poly[acrylonitrile(31)butyl acrylate(69)] | +17 | 1.4 | 3.1 | 0 |
| (h) poly[(acrylonitrile(65)-butadiene(35)] | +20 | 2.4 | 1.8 | 0 |
| (i) Carbofuran, only[6] | — | — | — | 36 |
| (j) None | — | — | — | 0 |

Remarks:
[1] Glass transition temperature
[2] Solubility of polymer, g/100 g of solvent.
[3] Solubility of chemical, g/100 g of solvent.
[4] Polyco [trademark] 2607.
[5] Polyco [trademark] 2612.
[6] Sc=4.3; application rate same as in polymer mixtures.

Example 5
This example shows application of the invention to herbicides.
A 20% dispersion of trifluralin [2,6-dinitro-N,N-dipropyl-4-(trifluoromethyl)aniline] in an acrylonitrile-butadiene copolymer having a glass transition temperature of 17°C as in Example 2 is prepared by adding 5.5 g of a 44% solution of trifluralin (commercial 0.48 kg/litre (4 lb/gallon) emulsifiable concentrate) to 117 g of polymer latex containing 11% solids. The dispersion was coagulated by the addition of 30% alum solution, washed with cold water, filtered, and dried overnight, then ground (using a food mill) by mixing the sample with solid carbon dioxide to pass a 300 μm (50) mesh screen.
200 g of fine sandy loam was treated with herbicide, and the herbicide was incorporated by tumbling the soil in a Patterson-Kelley (trademark) blender. The soil was then decanted into pots, and watered throughout the test as needed. Pots were placed in a growth chamber at 70°F (21°C) under 14 hr/day illumination.
At biweekly intervals, seeds of giant foxtail (stavia spp.) were planted in the treated soil, and the % control scored ten days later.
The results are shown in the following table:

| | % control of foxtail- immediate | % control of foxtail- after 2 wks | % control of foxtail- after 4 wks |
|---|---|---|---|
| Trifluralin—20% in acrylonitrile-butadiene copolymer Tg 17°C (Invention) | 90 | 90 | 85 |
| Trifluralin—44% emulsifiable concentrate (outside invention) | 90 | 80 | 50 |
| Untreated check | 0 | 0 | 0 |

The foregoing results demonstrate extended residual control of the formulation of the invention, at the same rate of trifluralin applied.

Example 6

This example illustrates field results with a herbicide. Granules based on a styrene-butadiene copolymer as in Example 4 were prepared according to the following recipe:

| | |
|---|---|
| 5328 g copolymer latex (23.8% solids) | 1268 g |
| 1030 g 44% trifluralin solution | 453 g |
| 45.3 g sodium silicate | 45.3 g |
| 45.3 g clay | 45.3 g |

The 44% trifluralin solution is a commercial formulation (Treflan-EC; trademark Elanco, Inc.)

The foregoing mixture was mixed with agitation. The dispersion was coagulated by the addition of 30% alum solution, washed with cold water, filtered and dried for three days in a vacuum oven to remove water and the solvent used in the commercial trifluralin formulation. The dispersion was then ground (using a food mill) by mixing the sample with solid carbon dioxide. Small amounts of calcined diatomaceous earth (Microcel E; trademark, Johns-Manville Corp) were added during the grinding process to reduce reagglomeration of the ground material. This final material was 24% active.

The granules were applied to the soil in early May using commercial equipment. A commercial formulation of trifluralin (Treflan EC, Elanco, Inc) was applied at the same time. Soil temperature at the time of application, according to the Weekly Weather and Crop Bulletin (U.S. Department of Commerce) was slightly below the 20°C release temperature. The herbicide granules were incorporated using a disc harrow. For some experimental plots, incorporation was delayed as shown in the table below, wherein the invention formulations are designated "Trifluralin-24G".

The plots were scored in late July for control of *Polygonum persicaria* (ladies thumb). A higher rating indicates greater % of control.

| Formulation | Immediate incorporation | 1 day delay | 4 day delay |
|---|---|---|---|
| Trifluralin-EC (outside invention) | 5.25 | 2.75 | 0.5 |
| Trifluralin-24G (invention) (smaller than 50 mesh) | 2.25 | 4.25 | 2.0 |
| Trifluralin-24G (invention) (30—50 mesh) | 2.00 | 2.50 | 1.5 |
| Trifluralin-24G (invention) (20—30 mesh) | 3.25 | 2.25 | 2.5 |

These data show that control can be obtained using formulations of this invention even when incorporation of the active ingredient into the soil is delayed for up to four days. Such delayed incorporation is not possible using the commercial emulsifiable concentrate.

Example 7

This example illustrates other compositions of the invention.

Herbicidal granules were prepared according to the procedure stated in Example 4 except that the 1.00—600 μm (18—30) mesh fraction was collected (pass 1.00 mm (18) mesh, does not pass 600 μm (30) mesh).

Granules of trifluralin dispersed in polymer were mixed with 400 gm of fine sandy loam soil using a Patterson-Kelley blender to fully incorporate the herbicide granules into the soil. A commercial formulation of trifluralin as in Example 6 was also applied to the soil and incorporated by the same procedure.

Five different rates of each formulation were evaluated corresponding to 0.14, 0.28, 0.56, 1.12 and 2.24 kg active ingredient/ha (1/8, 1/4, 1/2, 1 and 2 lb/acre).

Seeds of barnyardgrass (*Echinochloa crusgalli*) and yellow foxtail (*Setaria lutescens*) were sown in the treated soil. % control was determined after seeds germinated in soil untreated with a herbicide.

The table below shows compositions evaluated and the lowest rate giving 90% control or better.

TABLE

| Polymer | $T_g$ | % Polymer | % Filler | % Trif. | Y. Fox | B-grass |
|---|---|---|---|---|---|---|
| Acrylonitrile-butadiene copolymer | +13 | 75 | 0 | 25 | 0.56 (1/2) | 0.56 (1/2) |
| do | +13 | 33 | 33 | 33 | 0.28 (1/4) | 0.56 (1/2) |
| do | +13 | 50 | 0 | 50 | 0.14 (1/8) | 0.14 (1/8) |
| Acrylonitrilebutyl acrylate copolymer | +17 | 50 | 0 | 50 | 0.56 (1/2) | 0.14 (1/8) |
| Plasticized vinyl chloride copolymer | +24 | 50* | 0 | 50 | 0.28 (1/4) | 0.28 (1/4) |
| Commercial trifluralin formulation | — | — | — | — | 0.14 (1/8) | 0.14 (1/8) |

* Includes unknown amount of plasticizer.

Control improved as the fraction of trifluralin in the formulation was increased. Certain recipes gave initial control equal to the emulsifiable concentrate standard.

A test was also conducted in which pots containing each of the compositions described above were held for varying lengths of time at 7°C, brought to room temperature, watered and left in the greenhouse at 27°C until all seeds had germinated. In this test, the commercial formulation is showing less residual control than the experimental formulations, and is no longer controlling the target weeds at rates lower than 0.28 kg/ha (1/4 lb/acre), while the formulation of the subject invention are maintaining their control.

**Claims**

1. A pesticidal composition characterised in that it comprises
(A) a pesticide, and
(B) a polymer in which said pesticide is dispersed,
wherein said polymer has a crystallinity of 0—30%, an effective glass transition temperature of from −15° to 50°C, and the weight ratio of (B):(A) is from 40/60 to 99/1, and wherein the ratio of the solubility of (A) to the solubility of (B) is 4/1 or greater, or 1/4 or less based on a common solvent.

2. A composition according to claim 1 characterised in that the effective glass transition temperature of the polymer (B) is from −10° to 50°C.

3. A composition according to claim 1 or claim 2 characterised in that the pesticide is one which is active in soil.

4. A composition according to claim 1 or claim 2 characterised in that the pesticide is one which is normally non-persistent in soil.

5. A composition according to any one of the preceding claims characterised in that the polymer is one in which the pesticide has poor solubility.

6. A composition according to any of the preceding claims characterised in that it contains up to 70% by weight of filler based on the weight of (B).

7. A composition according to any of the preceding claims characterised in that (B) is a mixture of polymer and plasticizer having an effective glass transition temperature within said range.

8. A pesticidal composition according to any of the preceding claims characterised in that the polymer is selected from butadiene-acrylonitrile copolymer, butadiene-styrene copolymer, isoprene-acrylonitrile copolymer, carboxylated vinyl acetate copolymer, vinyl acetate-acrylic copolymer, vinyl chloride polymer, vinyl chloride copolymer, vinyl acetate-butyl acrylate-butadiene terpolymer, acrylonitrile-butyl acrylate-butadiene terpolymer, acrylonitrile-butyl acrylate copolymer and vinyl acetate polymer.

9. A composition according to any of the preceding claims characterised in that the pesticide is an insecticide.

10. A composition according to any of claims 1 to 8 characterised in that the pesticide is selected from:
3-trimethylstannylpropyl N-t-butylcarbamate
O,O-diethyl S-ethylthiomethyl phosphorodithioate
S-(1,1-dimethylethyl) thiomethyl O,O-diethyl phosphorodithioate
2,3-dihydro-2,2-dimethyl-7-benzofuranyl N-methylcarbamate
2,2-Dimethyl-1,3-benzodioxyl-4-yl N-methylcarbamate
1-methylethyl 2-((ethoxy)(1-methylethyl)amino)phosphinothioyloxy benzoate

10

O-ethyl S,S′-dipropyl phosphorodithioate

O-ethyl S-phenyl ethylphosphonodithioate

O,O-Diethyl O-(6-methyl-2-(1-methylethyl)-4-pyrimidinyl)phosphorothioate.

11. A composition according to claim 9 characterised in that the insecticide is an organotin, an organophosphate, or a carbamate insecticide.

12. A composition according to any of claims 1 to 8 characterised in that the pesticide is a herbicide.

13. A composition according to claim 12 characterised in that the herbicide is selected from carbamate herbicide, thiocarbamate herbicide, dithiocarbamate herbicide, dinitroaniline herbicide, acetanilide herbicide, triazine herbicide, amide herbicide, and phenoxy herbicide.

14. A method for controlling pests of plants characterised in that the method comprises applying to the soil a pesticidally effective amount of a composition as claimed in any of claims 1 to 13.

15. A method of treating soil in which plants are to be grown characterised in that the method comprises applying to the soil a composition as claimed in any of claims 1 to 13 in which the effective glass transition temperature of (B) is above the temperature of the soil at planting time and corresponds to a temperature at which it is desired to release the pesticide (A), whereby when the soil warms up at planting time to said glass transition temperature the pesticide (A) is released progressively more rapidly.

**Patentansprüche**

1. Zusammensetzung für die Schädlingsbekämpfung, dadurch gekennzeichnet, daß sie
(A) ein Schädlingsbekämpfungsmittel und
(B) ein Polymer, indem das Schädlingsbekämpfungsmittel dispergiert ist,
enthält wobei das Polymer eine Kristallinität von 0 bis 30% und eine effektive Glasumwandlungstemperatur von −15°C bis 50°C hat und das Gewichtverhältnis von (B):(A) 40/60 bis 99/1 beträgt und wobei das Verhältnis der Löslichkeit von (A) zu der Löslichkeit von (B), auf ein gemeinsames Lösungsmittel bezogen, 4/1 beträgt oder größer ist oder 1/4 beträgt oder kleiner ist.

2. Zusammensetzung nach Anspruch 1, dadurch gekennzeichnet, daß die effektive Glasumwandlungstemperatur des Polymers (B) −10°C bis 50°C beträgt.

3. Zusammensetzung nach Anspruch 1 oder 2, dadurch gekennzeichnet, daß das Schädlingsbekämpfungsmittel eines ist, das im Erdreich bzw. Boden wirksam ist.

4. Zusammensetzung nach Anspruch 1 oder 2, dadurch gekennzeichnet, daß das Schädlingsbekämpfungsmittel eines ist, das im Erdreich bzw. Boden normalerweise nicht persistent ist.

5. Zusammensetzung nach einem der vorhergehenden Ansprüche, dadurch gekennzeichnet, daß das Polymer eines ist, in dem das Schädlingsbekämpfungsmittel schlecht löslich ist.

6. Zusammensetzung nach einem der vorhergehenden Ansprüche, dadurch gekennzeichnet, daß sie bis zu 70 Gew.-% Füllstoff, auf das Gewicht von (B) bezogen, enthält.

7. Zusammensetzung nach einem der vorhergehenden Ansprüche, dadurch gekennzeichnet, daß (B) eine Mischung aus Polymer und Plastifizierungsmittel ist, die eine in dem erwähnten Bereich liegende effektive Glasumwandlungstemperatur hat.

8. Zusammensetzung für die Schädlingsbekämpfung nach einem der vorhergehenden Ansprüche, dadurch gekennzeichnet, daß das Polymer aus Butadien-Acrylnitril-Copolymer, Butadien-Styrol-Copolymer, Isopren-Acrylnitril-Copolymer, carboxyliertes Vinylacetat-Copolymer, Vinylacetat-Acryl-Copolymer, Vinylchlorid-Polymer, Vinylchlorid-Copolymer, Vinylacetat-Butylacrylat-Butadien-Terpolymer, Acrylnitril-Butylacrylat-Butadien-Terpolymer, Acrylnitril-Butylacrylat-Copolymer und Vinylacetat-Polymer ausgewählt ist.

9. Zusammensetzung nach einem der vorhergehenden Ansprüche, dadurch gekennzeichnet, daß das Schädlingsbekämpfungsmittel ein Insektizit ist.

10. Zusammensetzung nach einem der Ansprüche 1 bis 8, dadurch gekennzeichnet, daß das Schädlingsbekämpfungsmittel aus:

3-Trimethylstannylpropyl-N-t-butylcarbamat

O,O-Diethyl-S-(ethylthiomethyl)-dithiophosphat,

S-(1,1-Dimethylethyl)-thiomethyl-O,O-diethyldithiophosphat,

2,3-Dihydro-2,2-dimethyl-7-benzofuranyl-N-methylcarbamat,

2,2-Dimethyl-1,3-benzodioxol-4-yl-N-methylcarbamat,

1-Methylethyl-2-[(ethoxy)-(1-methylethyl)-amino]phosphinothioyl-oxybenzoat,

O-Ethyl-S,S-dipropyldithiophosphat,

O-Ethyl-S-phenyl-ethyldithiophosphonat,

O,O-Diethyl-O-{[6-methyl-2-(1-methylethyl)]-4-pyrimidyl}-thionophosphat.

ausgewählt ist.

11. Zusammensetzung nach Anspruch 9, dadurch gekennzeichnet, daß das Insektizit ein Organozinn-, ein Organophosphat- oder ein Carbamat-Insektizid ist.

12. Zusammensetzung nach einem der Ansprüche 1 bis 8, dadurch gekennzeichnet, daß das Schädlingsbekämpfungsmittel ein Herbizid ist.

13. Zusammensetzung nach Anspruch 12, dadurch gekennzeichnet, daß das Herbizid aus Carbamat-

**0 064 379**

Herbizid, Thiocarbamat-Herbizid, Dithiocarbamat-Herbizid, Dinitroanilin-Herbizid, Acetanilid-Herbizid, Triazin-Herbizid, Amid-Herbizid und Phenoxy-Herbizid ausgewählt ist.

14. Verfahren zur Bekämpfung von Pflanzenschädlingen, dadurch gekennzeichnet, daß bei dem Verfahren auf das Erdreich bzw. den Boden eine für die Schädlingsbekämpfung wirksame Menge einer Zusammensetzung nach einem der Ansprüche 1 bis 13 aufgebracht wird.

15. Verfahren zur Behandlung von Erdreich bzw. Boden in dem Pflanzen angebaut werden sollen, dadurch gekennzeichnet, daß bei dem Verfahren auf das Erdreich bzw. den Boden eine Zusammensetzung nach einem der Ansprüche 1 bis 13 aufgebracht wird, bei der die effektive Glasumwandlungstemperatur von (B) oberhalb der Temperatur liegt, die das Erdreich bzw. der Boden zur Zeit der Anpflanzung hat, und einer Temperatur entspricht, bei der eine Freisetzung des Schädlingsbekämpfungsmittels (A) erwünscht ist, wodurch das Schädlingsbekämpfungsmittel (A) zunehmend schneller freigesetzt wird, wenn sich das Erdreich bzw. der Boden zur Zeit der Anpflanzung auf die Glasumwandlungstemperatur erwärmt.

**Revendications**

1. Composition pesticide caractérisée en ce qu'elle comprend
(A) un pesticide, et
(B) un polymère dans lequel ledit pesticide est dispersé,
où ledit polymère a une cristallinité de 0—30%, une température de transition vitreuse effective de −15° à 50°C, et le rapport pondéral de (B):(A) est de 40/60 à 99/1, et où le rapport de la solubilité de (A) à la solubilité de (B) est de 4/1 ou plus, ou 1/4 ou moins en se basant sur un solvant commun.

2. Composition selon la revendication 1 caractérisée en ce que la température de transition vitreuse effective du polymère (B) est de −10° à 50°C.

3. Composition selon la revendication 1 ou la revendication 2 caractérisée en ce que le pesticide est actif dans le sol.

4. Composition selon la revendication 1 ou la revendication 2 caractérisée en ce que le pesticide est normalement non persistant dans le sol.

5. Composition selon l'une quelconque des revendications précédentes caractérisée en ce que le polymère est un dans lequel le pesticide a une mauvaise solubilité.

6. Composition selon l'une quelconque des revendications précédentes caractérisée en ce qu'elle contient jusqu'à 70% en poids de charge en se basant sur le poids de (B).

7. Composition selon l'une quelconque des revendications précédentes caractérisée en ce que (B) est un mélange de polymère et d'agent plastifiant ayant une température de transition vitreuse effective dans ladite gamme.

8. Composition pesticide selon l'une quelconque des revendications précédentes caractérisée en ce que le polymère est choisi parmi un copolymère de butadiène-acrylonitrile, un copolymère de butadiène-styrène, un copolymère d'isoprène-acrylonitrile, un copolymère d'acétate de vinyle carboxylé, un copolymère acétate de vinyle-acrylique, un polymère de chlorure de vinyle, un copolymère de chlorure de vinyle, un terpolymère d'acétate de vinyle-acrylate de butyle-butadiène, un terpolymère d'acrylonitrile-acrylate de butyle-butadiène, un copolymère d'acrylonitrile-acrylate de butyle et un polymère d'acétate de vinyle.

9. Composition selon l'une quelconque des revendications précédentes caractérisée en ce que le pesticide est un insecticide.

10. Composition selon l'une quelconque des revendications 1 à 8 caractérisée en ce que le pesticide est choisi parmi:
3-triméthylstannylpropyl N-t-butylcarbamate
O,O-diéthyl S-éthylthiométhyl phosphorodithioate
S-(1,1-diméthyléthyl)thiométhyl O,O-diéthyl phosphorodithioate
2,3-dihydro-2,2-diméthyl-7-benzofuranyl N-méthylcarbamate
2,2-Diméthyl-1,3-benzodioxyl-4-yl N-méthylcarbamate
1-méthyléthyl 2-((éthoxy)(1-méthyléthyl)amino)phosphinothioyloxy benzoate
O-éthyl S,S'-dipropyl phosphorodithioate
O-éthyl S-phényl éthylphosphonodithioate
O,O-Diéthyl O-(6-méthyl-2-(1-méthyléthyl)-4-pyrimidinyl)phosphorothioate.

11. Composition selon la revendication 9 caractérisée en ce que l'insecticide est un insecticide à base d'organoétain, d'organophosphate ou de carbamate.

12. Composition selon l'une quelconque des revendications 1 à 8 caractérisée en ce que le pesticide est un herbicide.

13. Composition selon la revendication 12 caractérisée en ce que l'herbicide est choisi parmi un herbicide à base de carbamate, un herbicide à base de thiocarbamate, un herbicide à base de dithiocarbamate, un herbicide à base de dinitroaniline, un herbicide à base d'acétanilide, un herbicide à base de triazine, un herbicide à base d'amide et un herbicide à base de phénoxy.

14. Méthode pour contrôler les fléaux des plantes caractérisée en ce que la méthode consiste à appliquer au sol un quantité efficace du point de vue pesticide d'une composition selon l'une quelconque des revendications 1 à 13.

12

15. Méthode de traitement du sol où des plantes doivent croître caractérisée en ce que la méthode consiste à appliquer, au sol, une composition selon l'une quelconque des revendications 1 à 13 où la température de transition vitreuse effective de (B) est au-delà de la température du sol au moment du plantage et correspond à une température à laquelle on souhaite libérer le pesticide (A), ainsi lorsque le sol s'échauffe au moment du plantage, à ladite température de transition vitreuse, le pesticide (A) est libéré progressivement plus rapidement.